# EUROPEAN PATENT APPLICATION

(11) **EP 2 937 982 A2**
(43) Date of publication of application: **28.10.2015**
(21) Application number: 15160447.7
(22) Date of filing: 24.03.2015
(51) Int. Cl.: H02M 5/297

(54) **SWITCH CONFIGURATION FOR A MATRIX CONVERTOR**

(30) Priority: 01.04.2014 US 201414231802
(71) Applicant: Hamilton Sundstrand Corporation, Windsor Locks, CT 06096-1010 (US)
(72) Inventor: White, Adam Michael, Belvidere, Illinois 61008 (US)
(74) Representative: Hughes, Andrea Michelle

(57) **Abstract**

A power conversion system (10) includes a power source (14), a matrix converter (12), and a controller (18). The power source (14) is configured to produce an input power. The matrix converter (12) is configured to convert the input power to output power and includes a plurality of normally-on switches and a plurality of normally-off switches. The controller (18) is configured to control the plurality of normally-on switches and the plurality of normally-off switches to control the output power. The plurality of normally-on switches provide the input power directly as the output power when the controller (18) is inactive.

## Description

### BACKGROUND

The present invention relates generally to matrix converters, and in particular to a matrix converter that includes both normally-on and normally-off switches.

Matrix converters provide, for example, AC-to-AC conversion, which may be utilized, for example, for aircraft applications such as driving an induction motor. Matrix converters are often utilized to achieve three-phase AC power conversion in a single stage without the use of intermediate energy storage elements. Matrix converters often comprise an array of switches controlled to provide the desired AC output. These switches may be controlled using, for example, an electronic system on an aircraft. In the event of a loss of controller power to the matrix converter, power will not flow from the input of the matrix converter to the motor, terminating power to the induction motor. It is desirable to continue to provide output power to the motor drive in the event of a failure of the electronic controls of the matrix converter.

### SUMMARY

A power conversion system (claim 1) includes a power source, a matrix converter, and a controller. The power source is configured to produce an input power. The matrix converter is configured to convert the input power to output power and includes a plurality of normally-on switches and a plurality of normally-off switches. The controller is configured to control the plurality of normally-on switches and the plurality of normally-off switches to control the output power. The plurality of normally-on switches provide the input power directly as the output power when the controller is inactive.

### BRIEF DESCRIPTION OF THE DRAWINGS

FIG. 1 is a block diagram illustrating a system that utilizes a matrix converter for power conversion.
FIG. 2 is a circuit diagram that illustrates a matrix converter for use in a power conversion system.
FIG. 3 is a circuit diagram that illustrates a normally-on bidirectional switch implemented utilizing normally-on junction gate field-effect transistors.
FIGS. 4A and 4B are circuit diagrams that illustrate normally-off bidirectional switches.

### DETAILED DESCRIPTION

A matrix converter is disclosed herein that includes normally-on and normally-off switches. The matrix includes a plurality of switches that connect, for example, a three-phase input to a three-phase output. The normally-on switches provide a direct input-to-output path for each of the three phases when the matrix converter is receiving no control. This allows power transmission through the matrix converter when, for example, the control circuit ceases control of the matrix converter for any reason.

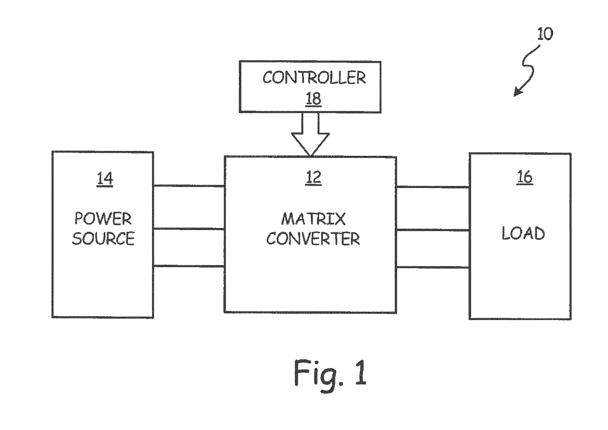

FIG. 1 is a block diagram illustrating system 10 that utilizes matrix converter 12 for power conversion. System 10 includes matrix converter 12, power source 14, load 16, and controller 18. System 10 may be, for example, an AC-to-AC converter for an aircraft motor drive. Power source 14 may be an AC power source such as, for example, a gas turbine engine generator. Load 16 may be, for example, any load that requires three-phase power, such as an induction motor. Controller 18 is any electronic system capable of providing control for matrix converter 12.

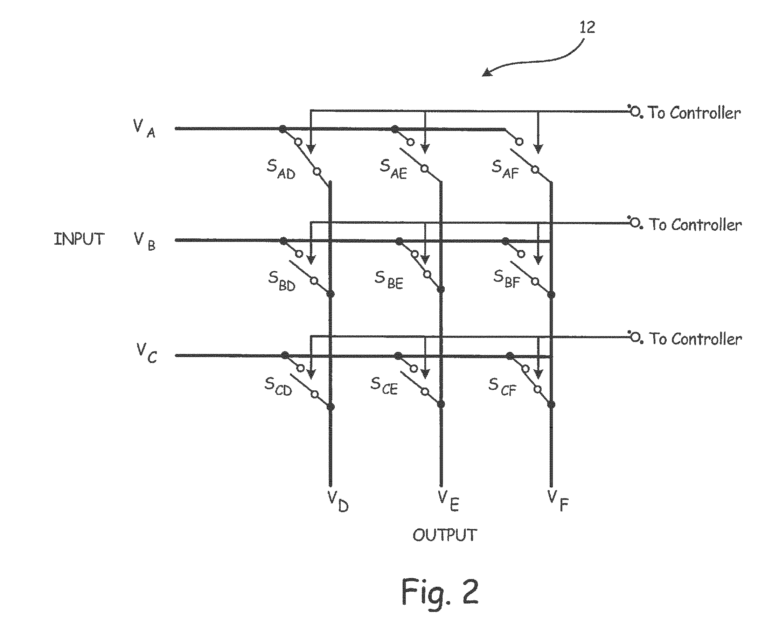

With continued reference to FIG. 1, FIG. 2 is a circuit diagram illustrating matrix converter 12 for use in power conversion system 10. Matrix converter 12 includes inputs V_{A}, V_{B}, and V_{C}, outputs V_{D}, V_{E}, and V_{F}, and bidirectional switches S_{AD}, S_{AE}, S_{AF}, S_{BD}, S_{BE}, S_{BF}, S_{CD}, S_{CE}, and S_{CF}, In the present embodiment, switches S_{AD}, S_{BE}, and S_{CF} are normally-on bidirectional switches, illustrated in FIG. 2 as closed switches. Bidirectional switches S_{AE}, S_{AP}, S_{BD}, S_{BF}, S_{CD}, and S_{CE} may be implemented as normally-off switches, illustrated in FIG. 2 as open switches.

With continued reference to FIGS. 1 and 2, FIG. 3 is a circuit diagram that illustrates an embodiment of one of normally-on bidirectional switches S_{AD}, S_{BE}, or S_{CF}. Switches S_{AD}, S_{BE}, and S_{CF} may be implemented utilizing normally-on junction gate field-effect transistors (JFETs) 20 and 22. Although illustrated as common source connected JFETS 20 and 22, normally-on switches S_{AD}, S_{BE}, and S_{CF} may also be implemented as, for example, common drain connected JFETs. Switches S_{AD}, S_{BE}, and S_{CF} may also include anti-parallel diodes D₁ and D₂ connected across each JFET 20 and 22. Transistors 20 and 22 may be made of any suitable semiconductor material such as, for example, silicon (Si), silicon carbide (SiC), or gallium nitride (GaN).

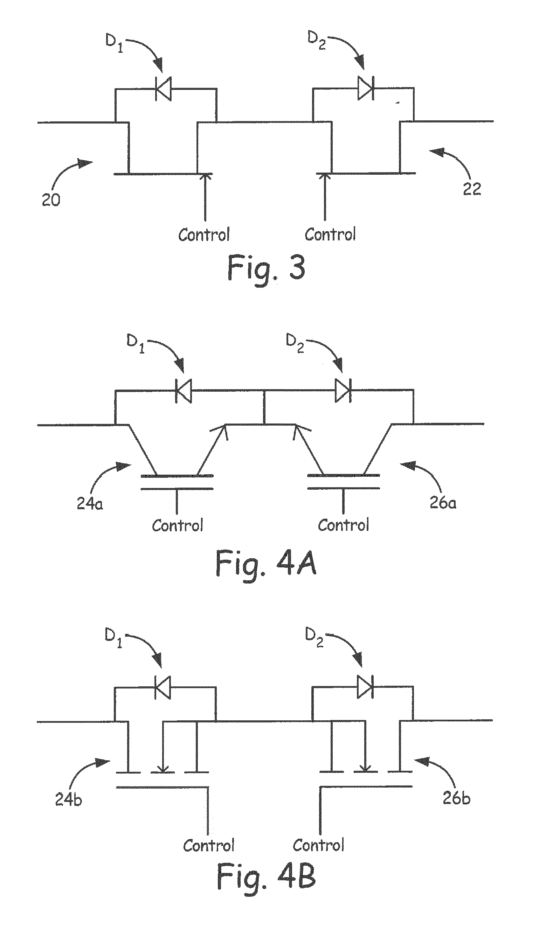

With continued reference to FIGS. 1-3, FIGS. 4A and 4B are circuit diagrams that illustrate embodiments of one of normally-off bidirectional switches S_{AE}, S_{AF}, S_{BD}, S_{BF}, S_{CD}, and S_{CE}. FIG. 4A is a circuit diagram that illustrates common emitter connected insulated gate bipolar transistors (IGBTs) 24a and 26a. FIG. 4B is a circuit diagram that illustrates common source connected metal-oxide-semiconductor field-effect transistors (MOSFETs) 24b and 26b. Although illustrated in FIG. 4A as common emitter connected IGBTs 24a and 26a, and illustrated in FIG. 4B as common source connected MOSFETSs 24b and 26b, switches S_{AE}, S_{AF}, S_{BD}, S_{BF}, S_{CD}, and S_{CE} may also be implemented as, for example, common collector connected IGBTs, or common drain connected MOSFETS. Transistors 24a, 24b, 26a, and 26b may also include anti-parallel diodes D₁ and D₂. Transistors 24a, 24b, 26a, and 26b may be made of any suitable semiconductor material such as, for example, silicon (Si), silicon carbide (SiC), or gallium nitride (GaN).

Normally-on switches, such as JFET's 20 and 22, conduct power when controller 18 is providing no gate control for the transistors. For example, JFETs 20 and 22 conduct between their source and drain terminals when no voltage is provided to their gate terminals. When a biasing voltage provided from, for example, controller 18 is provided to the gate terminals of the JFETs 20 and 22, JFETs 20 and 22 stops conducting between their source and drain terminals. Therefore, by connecting JFET's 20 and 22 in a common source or common drain configuration, a bidirectional, normally-on switch may be implemented.

If load 16 is, for example, a motor, controller 18 may provide active control to all switches S_{AD}-S_{CF} during a first condition, such as controlled startup of the motor. During startup, power source 14 may provide three-phase AC power to matrix converter 12. Switches S_{AD}-S_{CF} may be actively controlled by controller 18 to provide actively controlled output power to the motor drive. The actively controlled output power may be utilized to provide, for example, a gradually increasing output power to ramp the motor up to its operating speed. This may be accomplished using any modulation scheme by controller 18 such as, for example, pulse-width modulation. During active control, controller 18 may monitor inputs V_{A}-V_{C} and outputs V_{D}-V_{F} using, for example, voltage sensing, current sensing, or any other method of determining the condition of inputs V_{A}-V_{C} and outputs V_{D}-V_{F}. If controller 18 determines, for example, that greater or lesser power is needed on output V_{D}, controller 18 may control switches S_{AD}, S_{BD}, and S_{CD} to provide, for example, a conduction path from any combination of inputs V_{A}, V_{B}, and/or V_{C} to output V_{D} to control the power on output V_{D}. All switches S_{AD}-S_{CF} may be controlled in a similar fashion to control the power on outputs V_{D}-V_{F} based upon the power on inputs V_{A}-V_{C}. Upon reaching a second condition, such as a motor operating speed or operation at greater than a threshold, controller 18 may cease control of matrix converter 12 to directly pass the power from power source 14 to load 16. Alternatively, if sustained operation is desired at a frequency less than a threshold, for instance in a variable-speed application, system 10 may continue to operate in a mode of operation where controller 18 maintains active control of matrix converter 12.

When controller 18 is not providing active control for matrix converter 12, input power from power source 14 is provided directly to load 16 through normally-on switches S_{AD}, S_{BE}, and S_{CF}. Power from input V_{A} flows through normally-on switch S_{AD} to output V_{D}, power from input V_{B} flows through normally-on switch S_{BE} to output V_{E}, and power from input V_{C} flows through normally-on switch S_{CF} to output V_{F}. In past systems, when passing power directly from power source 14 to load 16, normally-off switches needed to be controlled by controller 18 to provide the direct conduction path. By eliminating the need for control of matrix converter 18 to pass the input power directly as output power, system robustness in this operating mode is improved. This is advantageous in, for example, high speed motor applications when it is desirable to pass the input power directly to load 16. The use of normally-on JFET's to directly conduct power from source 14 to load 16 is also advantageous over prior art systems because normally-on JFET's generally have lower conduction losses than MOSFET's of the same transistor size and voltage rating. Therefore, the power loss during direct conduction of the input power to load 16 is reduced, resulting in improved efficiency and reduced cooling requirements.

The configuration of matrix converter 12 is also advantageous in the event that there is a fault, or other power loss event in controller 18. In prior art systems, because all switches of the matrix converter were implemented as normally-off switches, if controller 18 became inoperable, power would be lost to load 16 regardless of whether power source 14 was still producing power. In certain critical applications, however, it is important to maintain continuity of power under fault conditions. In the case of inductive motors, for example, it is highly advantageous to continue to power the motor drive in the event that controller 18 becomes inoperable for any reason so as not to lose functionality of the motor. In the present embodiment, load 16 continues to receive power from input source 14 through matrix converter 12 when controller 18 is inoperable because normally-off switches conduct power when no control (i.e. zero voltage) is provided to matrix converter 12.

### Discussion of Possible Embodiments

The following are non-exclusive descriptions of possible embodiments of the present invention.

A power conversion system includes a power source, a matrix converter, and a controller. The power source is configured to produce an input power. The matrix converter is configured to convert the input power to output power and includes a plurality of normally-on switches and a plurality of normally-off switches. The controller is configured to control the plurality of normally-on switches and the plurality of normally-off switches to control the output power. The plurality of normally-on switches provide the input power directly as the output power when the controller is inactive.

A further embodiment of the foregoing system, wherein the input power is three-phase alternating current power and the output power is three-phase alternating current power.

A further embodiment of any of the foregoing systems, wherein the matrix converter further includes first, second, and third inputs that receive the input power, and first, second, and third outputs that provide the output power.

A further embodiment of any of the foregoing systems, wherein the plurality of normally-on switches include a first normally-on switch connected between the first input and the first output, a second normally-on switch connected between the second input and the second output, and a third normally-on switch connected between the third input and the third output.

A further embodiment of any of the foregoing systems, wherein the plurality of normally-off switches include a first normally-off switch connected between the first input and the second output, a second normally-off switch connected between the first input and the third output, a third normally-off switch connected between the second input and the first output, a fourth normally-off switch connected between the second input and the third output, a fifth normally-off switch connected between the third input and the first output, and a sixth normally-off switch connected between the third input and the second output.

A further embodiment of any of the foregoing systems, wherein the plurality of normally-on switches each comprise one of common source connected junction gate field-effect transistors, and common drain connected junction gate field-effect transistors.

A further embodiment of any of the foregoing systems, wherein the plurality of normally-off switches each comprise one of common source connected metal-oxide-semiconductor field-effect transistors, common drain connected metal-oxide-semiconductor field-effect transistors, common emitter connected insulated gate bipolar junction transistors and common collector connected insulated gate bipolar junction transistors.

A further embodiment of any of the foregoing systems, wherein the output power is provided to a motor drive of an induction motor.

A further embodiment of any of the foregoing systems, wherein the controller is further configured to control the plurality of normally-on switches and the plurality of normally-off switches during startup of the induction motor, and configured to provide no control of the plurality of normally-on switches and the plurality of normally off switches upon the induction motor reaching an operational speed.

A method of controlling a matrix converter includes, among other things: providing input power to the matrix converter from a power source; controlling a plurality of normally-on switches and a plurality of normally-off switches to provide an actively controlled output to a load during a first load condition; terminating control of the plurality of normally-on switches and the plurality of normally off switches during a second load condition; and providing the input power directly as output power to the load through a conduction path comprising the plurality of normally-on switches during the second load condition.

A further embodiment of the foregoing method, wherein providing the input power to the matrix converter comprises providing three-phase input power from the power source.

A further embodiment of any of the foregoing methods, wherein providing the input power directly as output power includes providing a first phase of the input power through a first normally-on switch to the load; providing a second phase of the input power through a second normally-on switch to the load; and providing a third phase of the input power through a third normally-on switch to the load.

A further embodiment of any of the foregoing methods, wherein the plurality of normally-on switches each comprise one of common source connected junction gate field-effect transistors, and common drain connected junction gate field-effect transistors.

A further embodiment of any of the foregoing methods, wherein the plurality of normally-off switches are bidirectional switches each comprising one of common source connected metal-oxide-semiconductor field-effect transistors, common drain connected metal-oxide-semiconductor field-effect transistors, common emitter connected insulated gate bipolar junction transistors and common collector connected insulated gate bipolar junction transistors.

A further embodiment of any of the foregoing methods, wherein the load is a motor drive for an induction motor, and wherein the first load condition comprises startup of the induction motor, and wherein the second load condition comprises operation at greater than a threshold speed of the induction motor.

While the invention has been described with reference to an exemplary embodiment(s), it will be understood by those skilled in the art that various changes may be made without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A power conversion system (10) comprising:
a power source (14) configured to produce an input power;
a matrix converter (12) configured to convert the input power to output power, the matrix converter comprising:
a plurality of normally-on switches; and
a plurality of normally-off switches; and
a controller (18) configured to control the plurality of normally-on switches and the plurality of normally-off switches to control the output power, wherein the plurality of normally-on switches provide the input power directly as the output power when the controller (18) is inactive.

2. The power conversion system (10) of claim 1, wherein the input power is three-phase alternating current power and the output power is three-phase alternating current power.

3. The power conversion system (10) of claim 2, wherein the matrix converter (12) further comprises:
first, second, and third inputs that receive the input power; and
first, second, and third outputs that provide the output power.

4. The power conversion system (10) of claim 3, wherein the plurality of normally-on switches comprise:
a first normally-on switch connected between the first input and the first output;
a second normally-on switch connected between the second input and the second output; and
a third normally-on switch connected between the third input and the third output.

5. The power conversion system (10) of claim 4, wherein the plurality of normally-off switches comprise:
a first normally-off switch connected between the first input and the second output;
a second normally-off switch connected between the first input and the third output;
a third normally-off switch connected between the second input and the first output;
a fourth normally-off switch connected between the second input and the third output;
a fifth normally-off switch connected between the third input and the first output; and
a sixth normally-off switch connected between the third input and the second output.

6. The power conversion system (10) of claim 1, wherein the plurality of normally-on switches each comprise one of common source connected junction gate field-effect transistors (20, 22), and common drain connected junction gate field-effect transistors.

7. The power conversion system (10) of claim 6, wherein the plurality of normally-off switches are bidirectional switches each comprising one of common source connected metal-oxide-semiconductor field-effect transistors, common drain connected metal-oxide-semiconductor field-effect transistors, common emitter connected insulated gate bipolar junction transistors and common collector connected insulated gate bipolar junction transistors.

8. The power conversion system (10) of claim 1, wherein the output power is provided to a motor drive of an induction motor.

9. The power conversion system of claim 8, wherein the controller (18) is further configured to control the plurality of normally-on switches and the plurality of normally-off switches during startup of the induction motor, and configured to provide no control of the plurality of normally-on switches and the plurality of normally off switches upon the induction motor reaching an operational speed.

10. A method of controlling a matrix converter (12) comprising:
providing input power to the matrix converter (12) from a power source;
controlling a plurality of normally-on switches and a plurality of normally-off switches to provide an actively controlled output to a load (16) during a first load condition;
terminating control of the plurality of normally-on switches and the plurality of normally off switches during a second load condition; and
providing the input power directly as output power to the load through a conduction path comprising the plurality of normally-on switches during the second load condition.

11. The method of claim 10, wherein providing the input power to the matrix converter (12) comprises providing three-phase input power from the power source.

12. The method of claim 11, wherein providing the input power directly as output power comprises:
providing a first phase of the input power through a first normally-on switch to the load;
providing a second phase of the input power through a second normally-on switch to the load; and
providing a third phase of the input power through a third normally-on switch to the load.

13. The method of claim 10, wherein the plurality of normally-on switches each comprise one of common source connected junction gate field-effect transistors, and common drain connected junction gate field-effect transistors.

14. The method of claim 13, wherein the plurality of normally-off switches are bidirectional switches each comprising one of common source connected metal-oxide-semiconductor field-effect transistors, common drain connected metal-oxide-semiconductor field-effect transistors, common emitter connected insulated gate bipolar junction transistors and common collector connected insulated gate bipolar junction transistors.

15. The method of claim 10, wherein the load (16) is a motor drive for an induction motor, and wherein the first load condition comprises startup of the induction motor, and wherein the second load condition comprises operation at greater than a threshold speed of the induction motor.
